# EUROPEAN PATENT APPLICATION

(11) **EP 4 697 215 A1**
(43) Date of publication of application: **18.02.2026**
(21) Application number: 25193691.0
(22) Date of filing: 04.08.2025
(51) Int. Cl.: G06F 21/57, G06F 8/61, G06F 9/455, H04L 9/32

(54) **CUSTOM SOFTWARE INSTALLATION BUNDLES FOR A HYPERVISOR**

(30) Priority: 14.08.2024 US 202418805433
(71) Applicant: VMware LLC, Palo Alto, CA 94304 (US)
(72) Inventor: Ramamurthy, Arjun, 560076 Bangalore, KA (IN); Ranjan, Ritesh, 560068 Bangalore, KA (IN); Mann, Timothy P., Palo Alto, CA, 94301 (US)
(74) Representative: Grünecker Patent- und Rechtsanwälte PartG mbB

(57) **Abstract**

An example method of installing a first software installation bundle (SIB) in a hypervisor of a computer includes: receiving, by the hypervisor, the first SIB, the first SIB having a first digital signature created using a first public-private key pair and a first certificate created using the first public-private key pair; receiving, by the hypervisor, a second SIB, the second SIB having a payload being the first certificate, the second SIB having a second digital signature created using a second public-private key pair and a second certificate created using the second public-private key pair; installing, by the hypervisor, the second SIB by verifying the second digital signature and adding the first certificate to a key store of the hypervisor; and installing, by the hypervisor, the first SIB by verifying trust of the first certificate in the key store and verifying the first digital signature.

## Description

### BACKGROUND

Computer virtualization is a technique that can involve executing virtual machine(s) under control of virtualization software on a physical machine having a hardware computing platform. A virtual machine (VM) can provide virtual hardware abstractions for processor, memory, storage, and the like to a guest operating system. The virtualization software, also referred to as a "hypervisor," can include one or more virtual machine monitors (VMMs) to provide execution environment(s) for the VM(s). As physical machines have grown larger, with greater processor core counts and memory sizes, virtualization can be key to the economic utilization of available hardware.

A user can install a hypervisor on a physical machine using a disk image. A disk image may be a snapshot of a storage device's structure and data. A disk image can be one or more files, such as an optical disk image (ISO image). Software of a hypervisor can be installed using software installation bundles (SIBs). A disk image can include a set of SIBs. In addition, a user can obtain or generate SIBs separate from a disk image. A SIB may be file(s) from which software can be installed. For example, a SIB can be a tarball, ZIP archive, or the like that includes a collection of files and associated metadata for installing the files into a filesystem of the hypervisor. For purposes of security, a vendor of a hypervisor can "sign" SIBs by applying a digital signature thereto. The digital signature can be used to validate the vendor is the source of the SIB and that the SIB has not been altered or tampered with since it was signed. A hypervisor can include a security feature that prevents execution of binaries, scripts, or both that did not originate from a signed SIB. A hypervisor can include a security feature that prevents some post-boot configurations of the hypervisor.

A user may desire to add custom binaries, scripts, or both as part of a hypervisor (e.g., during installation of the hypervisor or post-installation of the hypervisor). As noted above, a hypervisor may prevent execution of binaries/scripts that did not originate from a signed SIB. A user may be able to create a SIB but cannot sign the SIB with the vendor's digital signature. The user may further desire to apply custom configurations to the hypervisor after the hypervisor has booted. As noted above, a hypervisor may prevent some post-boot configurations from being applied, which may include those desired by the user. While the user can desire the security features of the hypervisor to prevent execution of malicious code and configurations, the user can also desire customizations of the hypervisor that are prevented by these security features. It can be advantageous to provide a more flexible security solution for a hypervisor.

### SUMMARY

In an embodiment, a method of installing a first software installation bundle (SIB) in a hypervisor of a computer is described. The method includes receiving, by the hypervisor, the first SIB, the first SIB having a first digital signature created using a first public-private key pair and a first certificate created using the first public-private key pair. The method includes receiving, by the hypervisor, a second SIB, the second SIB having a payload being the first certificate, the second SIB having a second digital signature created using a second public-private key pair and a second certificate created using the second public-private key pair. The method includes installing, by the hypervisor, the second SIB by verifying the second digital signature and adding the first certificate to a key store of the hypervisor. The method includes installing, by the hypervisor, the first SIB by verifying trust of the first certificate in the key store and verifying the first digital signature.

Further embodiments include a non-transitory computer-readable storage medium comprising instructions that cause a computer system to carry out the above method, as well as a computer system configured to carry out the above method.

### BRIEF DESCRIPTION OF THE DRAWINGS

Fig. 1 is a block diagram depicting a computing system according to some embodiments.
Fig. 2 is a flow diagram depicting a method of installing a custom SIB in a hypervisor according to some embodiments.
Fig. 3 is a flow diagram depicting a method of installing a custom SIB in a hypervisor according to further embodiments.
Fig. 4 is a flow diagram depicting a method of installing a custom SIB in a hypervisor according to still further embodiments.
Fig. 5 is a block diagram depicting a computing system according to some embodiments.

### DETAILED DESCRIPTION

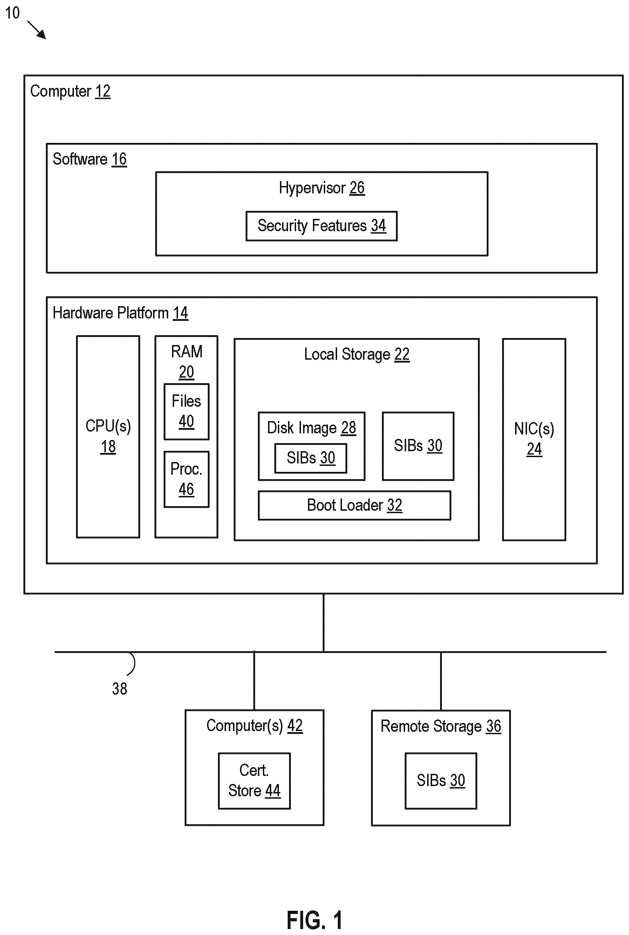

Fig. 1 is a block diagram depicting a computing system 10 according to some embodiments. Computing system 10 can include a computer 12, a network 38, and remote storage 36. Computer 12 may be a machine for storing and processing data. Computer 12 can include a hardware platform 14 and software 16 executing on hardware platform 14. Hardware platform 14 may be hardware components of computer 12, such as an x86 platform or an ARM platform. Hardware platform 14 includes conventional components of a computer, such as one or more central processing units (CPUs) 18, system memory (e.g., random-access memory (RAM) 20), one or more network interface controllers (NICs) 24, and local storage 22. Each CPU 18 may be circuits configured to execute instructions of software 16. RAM 20 may be circuits configured to store data (e.g., dynamic random-access memory (DRAM)). Each NIC 24 may be a circuit configured to connect hardware platform 14 to network 38. Local storage 22 may be device(s) configured to store data persistently (e.g., hard drives, solid-state drives (SSDs), FLASH memory, removable storage devices, and the like). Network 38 may be a system configured to enable communication between devices using an Open Systems Interconnection (OSI) model. Network 38 can enable communication between computer 12 and remote storage 36. Remote storage 36 may be device(s) configured to store data persistently. Remote storage 36 differs from local storage 22 in that remote storage 36 is external to computer 12 and accessible over network 38.

In embodiments, software 16 provides a virtualization layer, referred to herein as a hypervisor 26, which directly executes on hardware platform 14. For example, hypervisor 26 can be a Type-1 hypervisor (also known as a "bare-metal" hypervisor). Hypervisor 26 abstracts processor, memory, storage, and network resources of hardware platform 14 to provide a virtual machine execution space within which multiple VMs may be concurrently instantiated and executed (not shown). Hypervisor 26 includes security features 34, which are discussed further below. As is known in the art, hypervisor 26 can be a type of operating system (OS) of computer 12 that enables virtualization of hardware platform 14. While hypervisor 26 is shown by way of example, those skilled in the art will appreciate that the embodiments described herein may function with other types of operating systems that include security features 34.

In embodiments, local storage 22 can store a disk image 28 and a boot loader 32. Computer 32 can execute boot loader 32, which can process disk image 28 and store files 40 in RAM 20 (or local storage 22 or both). Boot loader 32 can also execute processes 46 from some file(s) 40 to perform further processing of disk image 28. Disk image 28 can include SIBs 30. Boot loader 32 or processes 46 can extract files 40 from SIBs 30 (referred to as installing SIBs 30). In some cases, local storage 22 can include SIBs 30 outside of a disk image (as discrete files). In some other cases, SIBs 30 can be stored and accessed in remote storage 36 (either in a disk image or as discrete files).

In some embodiments, during SIB installation, bootloader 32 or processes 46 check digital signatures in SIBs 30 prior to installing SIBs 30. The process of signature verification is discussed further below. In general, bootloader 32 or processes 46 checks whether the digital signature of a SIB 30 is valid using a digital certificate present in the SIB. Bootloader 32 or processes 46 can access a certificate store 44 managed by computer(s) 42 over network 38 to verify certificate trust, as discussed further below.

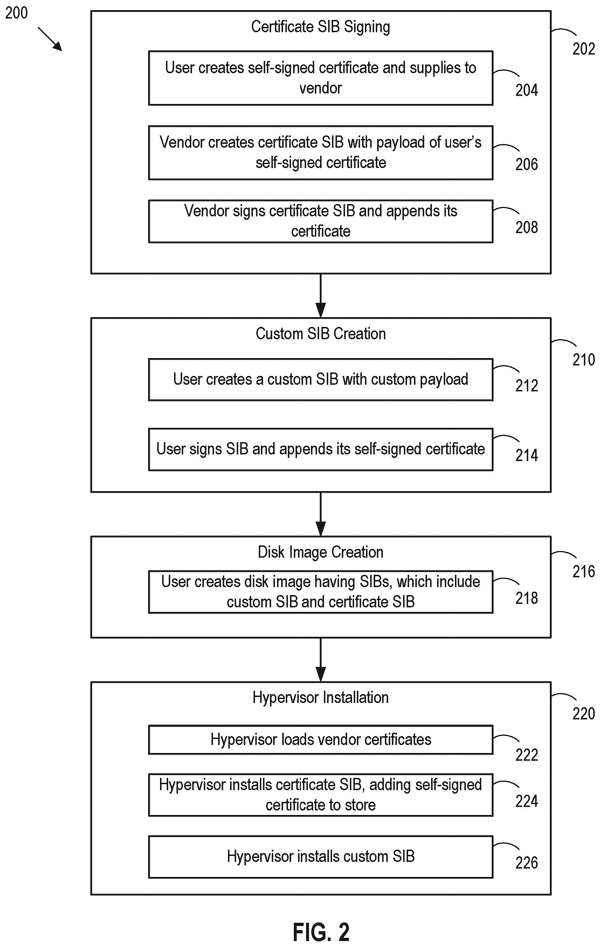

Fig. 2 is a flow diagram depicting a method 200 of installing a custom SIB in a hypervisor according to some embodiments. Method 200 begins at step 202, where certificate SIB signing is performed. Certificate SIB signing 202 begins at step 204, where a user can create a self-signed digital certificate ("certificate") and supplies the certificate to a vendor. A vendor may be a person, a company, or automated software (e.g., artificial intelligence (AI)). Likewise, a user may be a person, a company, or automated software (e.g., AI).

A certificate may be an electronic document used to prove ownership of a public key. To create a self-signed certificate, the user can create a public-private key pair. Public key cryptography (also known as asymmetric cryptography) may be a cryptographic system that uses pairs of keys, which each key pair includes a public key and a private key ("public-private key pairs"). A key may be a value that can be used to encrypt/decrypt data. A public key may be a key that can be shared with anyone. A private key may be a key that is kept secret by the owner. A public key can be used to encrypt data or verify a digital signature. A private key can be used to decrypt data that was encrypted with the corresponding public key or create a digital signature. A digital signature scheme may be a mathematical scheme for verifying authenticity of a digital document or message. A digital signature scheme can include a signing algorithm that uses a hash function to generate a fixed-size hash of the document and an encryption function to encrypt the hash value using a private key. A digital signature may be a value generated from encrypting the hash value. A digital signature scheme can include a verifying algorithm that, given the document, the public key corresponding to the private key, and the digital signature, either access or rejects the document's claim to authenticity. A certificate, document, file, etc. can be "signed" by creating a digital signature and appending the digital signature to certificate, document, file, etc.

Returning to step 204, the user creates a public-private key pair and then creates a certificate that verifies the user's ownership of the public key. The self-signed certificate includes a digital signature created using the user's private key corresponding to the public key. That is, the user signs the certificate they created (e.g., self-signed).

At step 206, the vendor of hypervisor ("vendor") creates a certificate SIB with a payload of the user's self-signed certificate. A payload of a SIB may be that which is to be installed from the SIB. At step 208, the vendor can sign the certificate SIB and appends its own certificate that is trusted by the hypervisor. The vendor can sign the certificate SIB with their private key.

Next, at step 210, custom SIB create is performed. Custom SIB creation 210 begins at step 212, where the user creates a custom SIB with a custom payload. The custom payload can be anything the user wants to be installed to the hypervisor. At step 214, the user signs the custom SIB with their private key and appends their self-signed certificate.

Next, at step 216, disk image creation is performed. Disk image creation 216 includes step 218, where the user creates a disk image having SIBs, which include the custom SIB and the certificate SIB. The disk image can include many other SIBs, including multiple custom SIBs.

Next, at step 220, hypervisor installation is performed. Hypervisor installation 220 begins at step 222, where the hypervisor loads the vendor's certificates, including the vendor certificate appended to the certificate SIB. The hypervisor can be programmed by the vendor to load and accept the vendor's certificates. At step 224, the hypervisor installs the certificate SIB and adds the self-signed certificate to its certificate store. Prior to step 224, the hypervisor may not be configured to trust the user's self-signed certificate. After step 224, the user's self-signed certificate can be added to the hypervisor's certificate store so that the self-signed certificate becomes trusted by the hypervisor. The hypervisor can verify the digital signature of the certificate SIB using the public key in the vendor's certificate, which is trusted.

At step 226, the hypervisor installs the custom SIB. The hypervisor can verify the digital signature of the custom SIB using the public key in the user's self-signed certificate, which is now trusted by the hypervisor after step 224. Method 200 can be performed to install any number of custom SIBs to hypervisor.

In method 200 described above, the vendor can release a tool that the user can use to create custom SIBs and disk images (e.g., at step 210 and step 216). In some cases, the vendor may not desire to release such a tool to the users in order to create custom SIBs for the hypervisor.

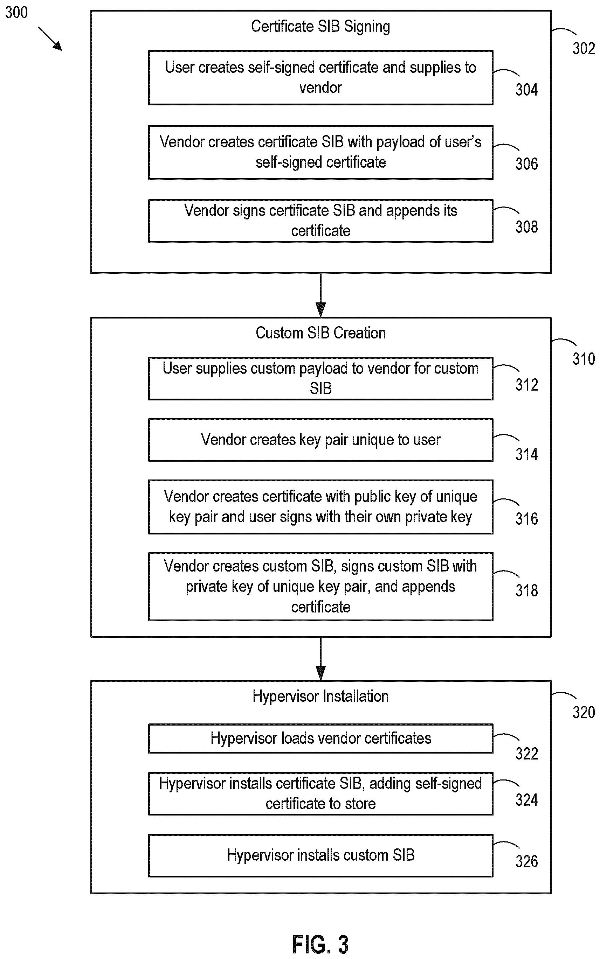

Fig. 3 is a flow diagram depicting a method 300 of installing a custom SIB in a hypervisor according to some embodiments. In the embodiment of Fig. 3, the vendor is not required to release the tool for creating SIBs for the hypervisor. Method 300 begins at step 302, where certificate SIB signing is performed. Certificate SIB signing 302 begins at step 304, where a user can create a self-signed certificate and supplies the certificate to a vendor. The self-signed certificate can be created as described above. At step 306, the vendor creates a certificate SIB with a payload of the user's self-signed certificate. At step 308, the vendor signs the certificate SIB and appends its own certificate that is trusted by the hypervisor.

Next, at step 310, custom SIB creation is performed. Custom SIB creation 310 begins at step 312, where the user supplies a custom payload to the vendor for the custom SIB. In this embodiment, the user cannot create the custom SIB on their own since there is no tool for doing so. At step 314, the vendor can create a unique public-private key pair for the user. At step 316, the vendor creates a certificate with the public key of the unique key pair and the user signs the certificate using their own private key. At step 318, the vendor can create a custom SIB with the custom payload. The vendor can sign the custom SIB with the private key of the unique key pair created in step 314. The vendor appends the certificate created in step 316 in the custom SIB. The vendor returns the custom SIB to the user. Steps 312 and 318 can be performed multiple times to create multiple custom SIBs for the user. The vendor can return the custom SIBs or a disk image having the custom SIBs.

At step 320, hypervisor installation is performed. Hypervisor installation begins at step 322, where the hypervisor loads the vendor's certificates, including the vendor certificate appended to the certificate SIB. At step 324, the hypervisor installs the certificate SIB and adds the self-signed certificate to its certificate store. The hypervisor can verify the digital signature of the certificate SIB using the public key in the vendor's certificate, which is trusted. At step 326, the hypervisor installs the custom SIB. The hypervisor can verify the digital signature of the custom SIB using the public key in the included certificate, which is now trusted by the hypervisor after step 324. Method 300 can be performed to install any number of custom SIBs to hypervisor.

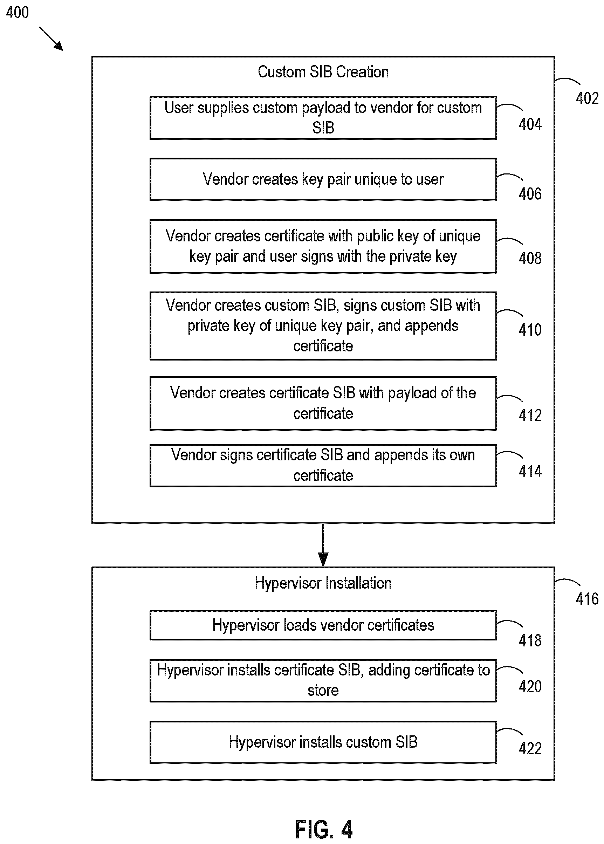

Fig. 4 is a flow diagram depicting a method 400 of installing a custom SIB in a hypervisor according to some embodiments. In the embodiment of Fig. 4, the vendor is not required to release the tool for creating SIBs for the hypervisor. Method 400 begins at step 402, where a custom SIB is created. Custom SIB creation 402 begins at step 404, where a user supplies a custom payload to the vendor for the custom SIB. In this embodiment, the user cannot create the custom SIB on their own since there is no tool for doing so. At step 406, the vendor can create a unique public-private key pair for the user. At step 408, the vendor creates a certificate with the public key of the unique key pair and the user signs the certificate with the private key of the unique key pair. At step 410, the vendor can create a custom SIB with the custom payload. The vendor can sign the custom SIB with the private key of the unique key pair created in step 406. The vendor appends the certificate created in step 408 in the custom SIB. The vendor returns the custom SIB to the user. Steps 404 and 410 can be performed multiple times to create multiple custom SIBs for the user. The vendor can return the custom SIBs or a disk image having the custom SIBs.

At step 412, the vendor creates a certificate SIB with a payload of certificate created in step 408. At step 414, the vendor signs the certificate SIB with their own private kay and appends its own certificate that is trusted by the hypervisor.

At step 416, hypervisor installation is performed. Hypervisor installation 412 begins at step 418, where the hypervisor loads the vendor's certificates, including the vendor certificate appended to the certificate SIB. At step 420, the hypervisor installs the certificate SIB and adds the user certificate generated at step 408 to its certificate store. The hypervisor can verify the digital signature of the certificate SIB using the public key in the vendor's certificate, which is trusted. At step 422, the hypervisor installs the custom SIB. The hypervisor can verify the digital signature of the custom SIB using the public key in the included certificate, which is now trusted by the hypervisor after step 420. Method 400 can be performed to install any number of custom SIBs to hypervisor.

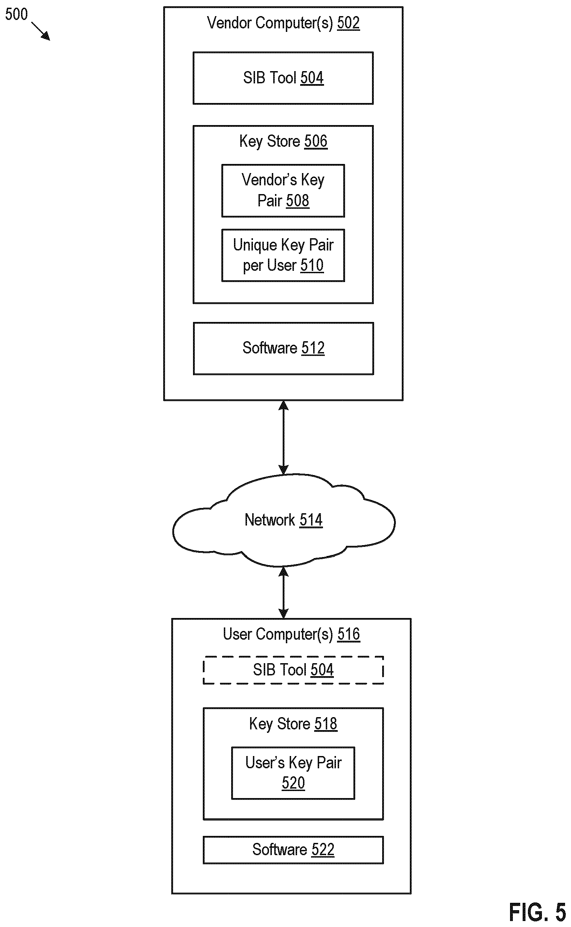

Fig. 5 is a block diagram depicting a computing system 500 according to some embodiments. Computing system 500 can include vendor computer(s) 502, a network 514, and user computer(s) 516. Vendor computer(s) 502 can execute software 512 for performing various steps of methods 200, 300, and 400 described above as being performed by the vendor. User computer(s) 516 can execute software 522 for performing various steps of methods 200, 300, and 400 described above as being performed by the user. Note that the user and vendor can perform steps manually or through software that executes on their behalf. User computer(s) 516 an exchange data with vendor computer(s) 502 through network 514. In some embodiments, user computer(s) 516 can execute SIB tool 504 that can be used to create SIBs (e.g., method 200). In some embodiments, vendor computer(s) 502 can execute SIB tool 504 that can be used to create SIB(s) (e.g., methods 300 and 400). User computer(s) 516 can include a key store 518 that stores a user's key pair 520. A key store can be a database that stores keys. User's key pair 520 can be a public-private key pair generated by the user. Vendor computer(s) 502 can include a key store 506 that stores vendor's key pair 508 and unique key pair per user 510. Vendor's key pair 508 can be a public-private key pair generated by the vendor. Unique key pair per user 510 can be a unique public-private key pair generated by the vendor on behalf of the user.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Certain embodiments as described above involve a hardware abstraction layer on top of a host computer. The hardware abstraction layer allows multiple contexts to share the hardware resource. These contexts can be isolated from each other, each having at least a user application running therein. The hardware abstraction layer thus provides benefits of resource isolation and allocation among the contexts. Virtual machines may be used as an example for the contexts and hypervisors may be used as an example for the hardware abstraction layer. In general, each virtual machine includes a guest operating system in which at least one application runs. It should be noted that these embodiments may also apply to other examples of contexts, such as containers. Containers implement operating system-level virtualization, wherein an abstraction layer is provided on top of a kernel of an operating system on a host computer or a kernel of a guest operating system of a VM. The abstraction layer supports multiple containers each including an application and its dependencies. Each container runs as an isolated process in userspace on the underlying operating system and shares the kernel with other containers. The container relies on the kernel's functionality to make use of resource isolation (CPU, memory, block I/O, network, etc.) and separate namespaces and to completely isolate the application's view of the operating environments. By using containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O. In some cases, if and where relevant, "virtualized computing instance" can encompass both VMs and containers.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary in some embodiments, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A method of installing a first software installation bundle (SIB) in a hypervisor of a computer, comprising:
receiving, by the hypervisor, the first SIB, the first SIB having a first digital signature created using a first public-private key pair and a first certificate created using the first public-private key pair;
receiving, by the hypervisor, a second SIB, the second SIB having a payload including the first certificate, the second SIB having a second digital signature created using a second public-private key pair, and a second certificate created using the second public-private key pair;
installing, by the hypervisor, the second SIB by verifying the second digital signature and adding the first certificate to a key store of the hypervisor; and
installing, by the hypervisor, the first SIB by verifying trust of the first certificate in the key store and verifying the first digital signature.

2. The method of claim 1, wherein the first public-private key pair is generated by a user of the hypervisor and the second public-private key pair is generated by a vendor of the hypervisor.

3. The method of claim 2, wherein the vendor creates the second SIB by:
receiving, from the user, the first certificate;
creating the second SIB with the payload including the first certificate; and
signing the second SIB using the second public-private key pair,
and/or
wherein the vendor creates the first SIB by:
receiving, from a user, a first payload for the first SIB;
creating, by the vendor, a third public-private key pair for the user;
signing, by the vendor, the first SIB using the third public-private key pair; and
adding, by the user, the public key of the third public-private key pair to the first certificate.

4. The method of claim 2, wherein the user creates the first SIB by:
creating, using a tool from the vendor, the first SIB having a first payload.

5. The method of claim 1, wherein the hypervisor receives the first SIB and the second SIB from a disk image, in particular wherein the user creates the disk image using a tool from the vendor.

6. A non-transitory computer readable medium comprising instructions to be executed in a computing device to cause the computing device to carry out a method of installing a first software installation bundle (SIB) in a hypervisor of a computer, comprising:
receiving, by the hypervisor, the first SIB, the first SIB having a first digital signature created using a first public-private key pair, and a first certificate created using the first public-private key pair;
receiving, by the hypervisor, a second SIB, the second SIB having a payload including the first certificate, the second SIB having a second digital signature created using a second public-private key pair, and a second certificate created using the second public-private key pair;
installing, by the hypervisor, the second SIB by verifying the second digital signature and adding the first certificate to a key store of the hypervisor; and
installing, by the hypervisor, the first SIB by verifying trust of the first certificate in the key store and verifying the first digital signature.

7. The non-transitory computer readable medium of claim 6, wherein the first public-private key pair is generated by a user of the hypervisor and the second public-private key pair is generated by a vendor of the hypervisor.

8. The non-transitory computer readable medium of claim 7, wherein the vendor creates the second SIB by:
receiving, from the user, the first certificate;
creating the second SIB with the payload including the first certificate; and
signing the second SIB using the second public-private key pair.

9. The non-transitory computer readable medium of claim 8, wherein the vendor creates the first SIB by:
receiving, from a user, a first payload for the first SIB;
creating, by the vendor, a third public-private key pair for the user;
signing, by the vendor, the first SIB using the third public-private key pair; and
adding, by the user, the public key of the third public-private key pair to the first certificate,
and/or,
wherein the user creates the first SIB by:
creating, using a tool from the vendor, the first SIB having a first payload.

10. The non-transitory computer readable medium of claim 6, wherein the hypervisor receives the first SIB and the second SIB from a disk image, in particular wherein the user creates the disk image using a tool from the vendor.

11. A computer, comprising:
a hardware platform having a central processing unit and a memory;
software, stored in the memory, and executable by the central processing unit to install a first software installation bundle (SIB) in a hypervisor by:
receiving, by the hypervisor, the first SIB, the first SIB having a first digital signature created using a first public-private key pair, and a first certificate created using the first public-private key pair;
receiving, by the hypervisor, a second SIB, the second SIB having a payload including the first certificate, the second SIB having a second digital signature created using a second public-private key pair, and a second certificate created using the second public-private key pair;
installing, by the hypervisor, the second SIB by verifying the second digital signature and adding the first certificate to a key store of the hypervisor; and
installing, by the hypervisor, the first SIB by verifying trust of the first certificate in the key store and verifying the first digital signature.

12. The computer of claim 11, wherein the first public-private key pair is generated by a user of the hypervisor and the second public-private key pair is generated by a vendor of the hypervisor.

13. The computer of claim 12, wherein the vendor creates the second SIB by:
receiving, from the user, the first certificate;
creating the second SIB with the payload including the first certificate; and
signing the second SIB using the second public-private key pair,
and/or
wherein the vendor creates the first SIB by:
receiving, from a user, a first payload for the first SIB;
creating, by the vendor, a third public-private key pair for the user;
signing, by the vendor, the first SIB using the third public-private key pair; and
adding, by the user, the public key of the third public-private key pair to the first certificate.

14. The computer of claim 12, wherein the user creates the first SIB by:
creating, using a tool from the vendor, the first SIB having a first payload.

15. The computer of claim 11, wherein the hypervisor receives the first SIB and the second SIB from a disk image.
